# EUROPÄISCHE PATENTSCHRIFT

(11) **EP 0 411 437 B1**
(45) Veröffentlichungstag und Bekanntmachung des Hinweises auf die Patenterteilung: **27.09.1995**
(21) Anmeldenummer: 90114142.4
(22) Anmeldetag: 24.07.1990
(51) Int. Cl.: C08J 9/16, C08J 9/12

(54) **Verfahren zur Herstellung von expandierbarem Granulat und Schaumstoffen daraus**
Process for producing expansible granulates and foam obtained thereby
Procédé de préparation de granulés expansibles, et mousses obtenues par ce procédé

(30) Priorität: 03.08.1989 DE 3925740
(43) Veröffentlichungstag der Anmeldung: 06.02.1991
(73) Patentinhaber: BASF Aktiengesellschaft, 67063 Ludwigshafen (DE)
(72) Erfinder: Weber, Heinz, Dr., D-6718 Gruenstadt (DE); Ehrmann, Gerd, Dr., D-6705 Deidesheim (DE); Dietzen, Franz-Josef, Dr., D-6685 Schiffweiler (DE); Nintz, Eckhard, Dr., D-6700 Ludwigshafen (DE); Zettler, Hans Dieter, D-6718 Gruenstadt (DE)

(56) Entgegenhaltungen:
- FR-A- 1 463 182
- DATABASE JAPS; & JP-A-62 022 833 (ASAHI CHEM. IND. CO., LTD) 31-01-1987
- SOCIETY PLASTIC ENGINEERING TECHNICAL PAPERS, Band 24, 1978, Seiten 668-674; W. L. SMAROOK: "Foamed polysulfone composite structures"

## Beschreibung

Die vorliegende Erfindung betrifft ein Verfahren zur Herstellung von expandierbarem Granulat und Schaumstoffen daraus, auf der Basis von Polyarylethersulfonen, enthaltend 5 bis 20 Gew.-%, bezogen auf das Gesamtgewicht des Granulats, Methylethylketon oder Aceton als Treibmittel.

Schaumstoffe auf der Basis von hochtemperaturbeständigen Polymeren sind in der Technik gefragt für die Herstellung von Formteilen für die verschiedensten Zwecke, beispielsweise im Fahrzeug- und Flugzeugbau sowie in der Elektronik.

Expandierbare Granulate sowie daraus hergestellte Schaumstoffe auf der Basis von Polyarylethersulfonen und Verfahren zu ihrer Herstellung sind an sich bekannt und z.B. in GB-A-1 569 763 und EP-A-186 308 beschrieben; die Reproduzierbarkeit und Wirtschaftlichkeit dieser Verfahren sind jedoch noch nicht in vollem Umfang gegeben.

Aufgabe der Erfindung war es daher, ein Verfahren zur Herstellung von expandierbaren Granulaten auf der Basis von Polyarylethersulfonen zur Verfügung zu stellen, welches reproduzierbar und wirtschaftlich ist, sowie lager- und transportfähige Granulate liefert.

Eine weitere Aufgabe der Erfindung lag darin, ein Verfahren zur Herstellung von Schaumstoffen aus den nach dem erfindungsgemäßen Verfahren erhaltenen Granulaten zugänglich zu machen.

Demgemäß wurde ein Verfahren zur Herstellung von expandierbarem Granulat auf der Basis von Polyarylethersulfonen, enthaltend 5 bis 20 Gew.-%, bezogen auf das Gesamtgewicht des Granulats, Methylethylketon oder Aceton als Treibmittel, gefunden, wobei das Treibmittel und die Polymeren in einem Extruder bei einer Gehäusetemperatur von mindestens 50°C und maximal 170°C gemischt und anschließend direkt in ein Medium mit einer Temperatur von weniger als 40°C extrudiert werden.

Außerdem wurde ein Verfahren zur Herstellung von Schaumstoffen aus einem expandierbaren Granulat auf der Basis von Polyarylethersulfonen, enthaltend 5 bis 20 Gew.-%, bezogen auf das Gesamtgewicht des Granulats, eines physikalischen Treibmittels, gefunden, wobei man
a) das Granulat bei einer Temperatur von 120 bis 250°C und einem Druck von 5 bis 30 bar zu einer Platte mit einer Dicke von 1 bis 20 mm verpreßt und anschließend
b₁) durch Druckerniedrigung aufschäumt
oder
b₂) nach dem Abkühlen unter Druck die so erhaltene Platte durch erneutes Erhitzen auf Temperaturen von 150 bis 250°C aufschäumt
und gegebenenfalls
c) den so erhaltenen Schaumstoff einer thermischen Behandlung zur weitgehenden Entfernung des noch vorhandenen Treibmittels unterwirft.

In einer Veröffentlichung in "Society Plastic Engineering Technical Papers", Band 24 (1978), Seiten 668-674 beschreibt W.L. Smarock Polysulfon-Schaumstoffe und deren Herstellung unter Verwendung verschiedener Treibmittel, vorzugsweise Methylenchlorid. Methylethylketon und Aceton sind aber nicht genannt. Dabei werden Polysulfon und Methylenchlorid ohne Temperaturerhöhung zu einer teigartigen Masse verknetet, extrudiert und granuliert. Das Granulat wird dann verschäumt.

Die zur Herstellung des expandierbaren Granulats dienenden Polyarylethersulfone oder Polyetherimide sind an sich bekannt; sie können nach üblichen Verfahren, wie in EP-A-274 098 oder DE-A-2 437 286 und DE-A-2 441 539 beschrieben, hergestellt werden.

Geeignete Polyarylethersulfone sind beispielsweise die nach dem Verfahren in EP-A-274 098 hergestellten. Bevorzugt sind Polyarylethersulfone, die die allgemeinen Struktureinheiten

⁅O-C₆H₄-C(CH₃)₂-C₆H₄-O-C₆H₄-SO₂-C₆H₄⁆

und

⁅O-C₆H₄-SO₂-C₆H₄-O-C₆H₄-SO₂-C₆H₄⁆

enthalten.

Als Treibmittel werden Methylethylketon und Aceton oder deren Gemische eingesetzt. Um leichte, feinzellige Schaumstoffe herzustellen, ist es möglich, zusätzlich ein chemisches Treibmittel wie Azodicarbonamid in das expandierbare Granulat einzuarbeiten, wie es beispielsweise in der US-A-4 308 352 erwähnt ist.

Weiterhin können Keimbildner wie Talkum, feinteiliges Siliciumdioxid, Carbonate oder Glasfasern und gegebenenfalls Flammschutzmittel wie Zinkborat und/oder Bortrioxid in das Granulat eingemischt werden. Die Flammschutzmittel beeinflussen ihrerseits ebenfalls die Keimbildung.

Die Herstellung des expandierbaren Granulats erfolgt vorzugsweise auf Zweischneckenextrudern, insbesondere auf gleichsinnig drehenden Systemen, durch intensives Vermischen der zugeführten Komponenten.

Bei dem hierzu beschreibenden Verfahren muß im Gegensatz zu den Direktbegasungsverfahren das Polymere vor der Treibmittelzugabe nicht mehr auf Temperaturen oberhalb der Glasübergangstemperatur des treibmittelfreien Polymeren erhitzt werden, da das zugeführte Treibmittel die Glasübergangstemperatur des Polyarylethersulfons absenkt, wodurch eine Aufbereitung bei Zylindertemperaturen des Extruders von 50 bis 160°C, vorzugsweise 70 bis 140°C, möglich wird, was unter anderem beträchtliche energetische Vorteile mit sich bringt.

Für einen problemlosen Betrieb der Anlage ist es erforderlich, die Treibmitteleinspritzung von der Polymerdosierung zu trennen. Dies und die gewünschte Homogenisierwirkung können, z.B. durch eine geeignete Schneckenkonfiguration erreicht werden.

Als Ausformwerkzeuge eignen sich die an sich bekannten Vorrichtungen, bevorzugt wird eine Düse mit einer oder mehreren Bohrungen eingesetzt. Die Schergeschwindigkeiten in der Düsenbohrung betragen vorzugsweise 100 bis 4000 s⁻¹, insbesondere 200 bis 2000 s⁻¹, die mittleren Austrittsgeschwindigkeiten vorzugsweise 10 bis 1500 mm/s, bevorzugt 100 bis 1000 mm/s.

Um das sofortige Aufschäumen des aus dem Ausformwerkzeug austretenden Strangs zu verhindern, ist ein unmittelbares Abkühlen auf Temperaturen unterhalb des Erweichungspunktes notwendig, vorteilhaft auf Temperaturen unterhalb 40°C, insbesondere unterhalb 25°C. Eine bevorzugte Ausführungsform besteht darin, daß durch eine unterhalb einer Wasseroberfläche liegenden Düse in ein Wasserbad extrudiert und anschließend granuliert wird. Statt Wasser können auch andere Medien mit ausreichender Temperaturleitfähigkeit verwendet werden, die sich gegenüber dem verwendeten Polyarylethersulfon oder Polyetherimid inert verhalten.

Wenn der austretende Strang bei der Extrusion nicht gekühlt wird, schäumt dieser sofort auf. Auf diese Weise können auch Schaumstoffbahnen hergestellt werden, jedoch bedingen Schaumstoffbahnen ein hohes Transportvolumen. Die bei der Anwendung geforderte Breite der Bahnen benötigt sehr große und damit teure Extruder.

Das nach dem erfindungsgemäßen Verfahren hergestellte expandierbare Granulat enthält 5 bis 20 Gew.-% Treibmittel und ist lagerbeständig, wobei es vorteilhafterweise nur ein geringes Lager- und Transportvolumen beansprucht.

Beim erfindungsgemäßen Verfahren zur Herstellung von Schaumstoffen aus einem expandierbaren Granulat auf der Basis von Polyarylethersulfonen wird das Granulat, das noch 5 bis 20 Gew.-% Treibmittel und gegebenenfalls 0,5 bis 10 Gew.-%, insbesondere 1 bis 5 Gew.-% Keimbildner enthält, in einem ersten Verfahrensschritt durch Temperatur- und Druckerhöhung zu einer Platte verpreßt. Man arbeitet in an sich bekannten Vorrichtungen, wobei bevorzugt eine heiz- und kühlbare Tauchkantenform, die in eine Presse eingebaut ist, verwendet wird. Hierbei wird das Granulat gleichmäßig in den unteren, wannenförmigen Teil der Form eingefüllt; vorzugsweise werden pro dm² Formgrundfläche 0,05 bis 0,3 kg, insbesondere etwa 0,1 kg Granulat eingesetzt. Nach Schließen der Form durch Zufahren des oberen Formstempels wird auf Temperaturen von 120 bis 250°C, vorzugsweise 150 bis 210°C geheizt, bei einem Preßdruck von 5 bis 30 bar, vorzugsweise 8 bis 20 bar und 1 bis 10 min, vorzugsweise 3 bis 8 min bei dieser Temperatur und diesem Druck gehalten. Diese relativ kurzen Zeiten haben ihre Ursache darin, daß kompaktes schäumfähiges Granulat bzw. die daraus erschmolzene, kompakte Platte eine erheblich höhere Wärmeleitfähigkeit besitzen als z.B. ein Schaumstoff. Dabei entsteht aus der Granulatschüttung eine kompakte, 1 bis 20 mm, insbesondere 8 bis 12 mm, dicke, treibmittelhaltige Platte. Vorzugsweise schäumt man diese Platte in einem zweiten Verfahrensschritt innerhalb von 30 bis 300 sec, insbesondere innerhalb von 60 bis 180 sec, durch Druckerniedrigung auf 10 bis 1 bar, vorzugsweise 5 bis 1 bar sofort auf. Jedoch ist es auch möglich, diese schaumfähige Platte nach dem Abkühlen unter Druck durch erneutes Erhitzen auf Temperaturen von 150 bis 250°C, vorzugsweise 170 bis 220°C aufzuschäumen. Die schäumfähige Platte kann auch der Form entnommen, gelagert und zu einem späteren Zeitpunkt aufgeschäumt werden. Man erhält nach diesen Verfahren einen Schaumblock von beispielsweise 20 bis 30 cm Höhe mit einer der verwendeten Form entsprechenden Grundfläche.

Die pro Flächeneinheit der Form eingefüllte Granulatmenge, die Menge des enthaltenen Treibmittels und die Schäumtemperatur beeinflussen die Rohdichte des erhaltenen Schaumstoffs.

Bei dem vorzugsweise verwendeten Tauchkantenverfahren entstehen gegenüber den normalen, mehr kugelförmigen, Zellen solche, die in Schäumrichtung gelängt sind, d.h. das L/D-Verhältnis liegt vorzugsweise im Bereich von 5:1 bis 12:1. Dies hat zur Folge, daß die Druckfestigkeit bei gleicher Rohdichte in Richtung der Orientierung erhöht wird. Demnach lassen sich auch bei geringeren Rohdichten, wie sie beispielsweise im Flugzeugbau von Bedeutung sind, vergleichsweise höhere Druckfestigkeiten erzielen.

Gemäß einer bevorzugten Ausführungsform des erfindungsgemäßen Verfahrens zur Herstellung von Schaumstoffen werden Mischungen aus chemischen und physikalischen Treibmitteln verwendet, wodurch eine zusätzliche Nukleierung des Schaumstoffs erreicht wird und dieser besonders leicht und feinzellig wird.

Der so hergestellte Schaumstoff enthält zunächst noch deutliche Mengen an Treibmittel. Gegebenenfalls kann der Treibmittelgehalt in einem dritten Verfahrensschritt auf weniger als 0,5 Gew.-% gesenkt werden, indem der Schaumstoff in Platten mit einer Dicke von 3 bis 30 mm, vorzugsweise 8 bis 12 mm aufgeteilt wird und diese 10 bis 120 min, vorzugsweise 20 bis 60 min, bei bis zu 200°C ansteigenden Temperaturen, vorzugsweise bis 180°C, in Trockenkammern getempert werden. Die durch das jeweils noch enthaltene Treibmittel bedingte Erniedrigung des Erweichungsbereiches bestimmt die maximal mögliche Trockentemperatur.

Wegen ihres thermoplastischen Verhaltens ist es möglich, diese Schaumstoffplatten in geeigneten Vorrichtungen durch Thermoformverfahren umzuformen.

Die so erhaltenen ebenen bzw. umgeformten Schaumstoffplatten lassen sich - als Kernmaterial - mit harzhaltigen Glasfasergeweben in an sich bekannter Weise laminieren, wodurch insbesondere die mechanischen Eigenschaften und das Brandverhalten verbessert werden. Verfahren zur Herstellung solcher Laminate sind dem Fachmann an sich bekannt und z.B. in der EP-A-313 171 beschrieben.

Die erfindungsgemäßen Verfahren zur Herstellung eines expandierbaren Granulats bzw. von Schaumstoffen zeichnen sich vor allem durch ihre Reproduzierbarkeit und Wirtschaftlichkeit aus, ohne daß dadurch die Produkteigenschaften beeinträchtigt werden. Von Vorteil ist, daß die Durchführung jedes einzelnen Verfahrensschrittes, soweit zweckmäßig, an verschiedenen Orten erfolgen kann.

### Beispiel 1

In einen Zweiwellenextruder wurden pro Stunde 10 Gew.-Teile eines Polyethersulfon-Pulvers Victrex P 4100 der ICI (Oberfläche nach BET 19,7 m²/g, mittlere Korngröße 450 µm) sowie 0,1 Gew.-Teile Talkum und 1,2 Gew.-Teile Methylethylketon eindosiert.

Die maximale Gehäusetemperatur wurde auf 140°C gehalten und vor den Austragsdüsen auf 110°C abgesenkt. Die Schmelze wurde über Runddüsen direkt in ein Wasserbad von 20°C eingetragen, der erstarrte Strang wurde getrocknet und granuliert.

Das Granulat wies eine Schüttdichte von 675 kg/m³ auf, es enthielt 8,5 Gew.-% Methylethylketon und 0,7 Gew.-% Wasser. Dieses treibmittelhaltige Granulat war in verschlossenen Gebinden über Monate lagerfähig.

In eine Tauchkantenform wurden pro dm² Grundfläche 0,1 kg Granulat eingefüllt. Bei einer Temperatur von 195°C, einem Preßdruck von 20 bar und einer Preßdauer von 5 min entstand eine 10 mm dicke, treibmittelhaltige Platte, die zu einem Schaumblock von 20 cm Höhe aufgeschäumt wurde. Nach Aufteilen in 10 mm dicke Platten wurde das Material 20 min bei bis auf 190°C ansteigenden Temperaturen in Trockenkammern getempert, wodurch der Treibmittelgehalt von 3,5 Gew.-% auf 0,2 Gew.-% gesenkt wurde.

Das Produkt besaß eine Rohdichte von 59 kg/m³.

### Beispiel 2

In einen Zweiwellenextruder wurden pro Stunde 10 Gew.-Teile eines Copolymeren aus 95 Gew.-%
⁅O-C₆H₄-SO₂-G₆H₄⁆Einheiten und 5 Gew.-%
⁅O-C₆H₄-C(CH₃)₂-C₆H₄-O-C₆H₄-SO₂-C₆H₄⁆Einheiten
eindosiert. Das Polymere zeigte eine Viskositätszahl von 52 dl/g, gemessen mit 1 g/100 cm³ in N-Methylpyrrolidon. Es bestand aus kugelförmigen Teilchen von 1 mm Durchmesser und besaß eine Oberfläche nach BET von 13,4 m²/g. Seine Schüttdichte betrug 190 kg/m³.

Ferner wurden pro Stunde zugegeben 1,3 Gew.-Teile Methylethylketon sowie 0,5 Gew.-Teile Kurzglasfasern vom Durchmesser 10 µm und 0,05 bis 5 mm Faserlänge.

Wie in Beispiel 1 beschrieben, wurde ein treibmittelhaltiges Granulat im Zweiwellenextruder bei maximaler Gehäusetemperatur von 170°C mit 9,5 Gew.-% Methylethylketon und einer Schüttdichte von 630 kg/m³ hergestellt. Dieses Granulat wurde in eine rechteckige Form eingefüllt und durch Nachpressen des Stempels zu einer ca. 10 mm dicken Platte zusammengeschmolzen. Die angewendeten Temperaturen beeinflussen die Rohdichte der erhaltenen Schaumstoffe (siehe Tabelle). Nach öffnen der Presse bei den angegebenen Temperaturen expandierte der Schaum nach oben und den Seiten und besaß eine vorwiegend isotrope Zellstruktur. Der Zelldurchmesser betrug 0,3 bis 0,8 mm.

| | Schäumtemperatur [°C] | Rohdichte [kg/m³] | Druckfestigkeit (DIN 53 421) [N/mm²] |
|---|---|---|---|
| 1 | 150 | 72 | 0,98 |
| 2 | 180 | 48 | 0,45 |
| 3 | 200 | 38 | 0,20 |
| Der Schubmodul von Probe 2 lag bei 10,5 N/mm² (DIN 53 294). | | | |

### Beispiel 3

Man verfuhr wie in Beispiel 2, ließ den Schaumstoff aber nicht allseitig, sondern durch seitliche Begrenzung nur nach oben expandieren.

Bei einer Schäumtemperatur von 190°C erhielt man einen Schaumstoff mit in Schäumrichtung gelängten Zellen der Abmessungen 0,9 x 8 mm. Die Druckfestigkeit (DIN 53 421) betrug 0,61 N/mm² bei einer Rohdichte von 47 kg/m³.

Die Wärmeformbeständigkeit betrug 225°C (DIN 53 424, Druckversuch).

Stellte man ein treibmittelhaltiges Granulat wie in Beispiel 2 her und mischte außerdem 0,4 Gew.-Teile Zinkborat ein, so erhielt man die in der Tabelle aufgeführten Werte.

Die Prüfung in der OSU-Kammer nach Federal Aviation Regulation "Lufttüchtigkeitsanforderungen für Verkehrsflugzeuge", 25.853 "Brandschutz, Inneneinrichtung der Räume", Anforderungsklasse (a-1), "Wärmefreisetzung" an Probeplatten der Abmessung 150 x 150 x 10 mm wurde ebenfalls in die Tabelle aufgenommen.

| Rohdichte [kg/m³) | Flammschutzmittel | [Gew.-%] | Treibmittel [Gew.-%] | Schäumtemperatur [°C] | OSU-Werte | |
|---|---|---|---|---|---|---|
| | | | | | HRR [kW/m²] | HR [kW·min/m²] |
| 47 | - | - | 9,5 | 190 | 34 | 25 |
| 36 | 3 ZnO·2 B₂O₃ | 4,0 | 10,4 | 200 | 11 | 5 |
| 55 | 3 ZnO·2 B₂O₃ | 4,0 | 10,4 | 170 | 27 | 23 |

### Beispiel 4

Gegenüber Beispiel 2 wurde das beschriebene Ausgangsmaterial mit verschiedenen Treibmittelarten und -mengen beaufschlagt. Bei einer Schäumtemperatur von 195°C erhielt man Schaumstoffe verschiedener Rohdichten (siehe Tabelle). Das Aufschäumen verlief gerichtet (siehe Beispiel 3); die Zellen waren daher im Verhältnis von 6:1 bis 10:1 gelängt.

| Treibmittel | | Rohdichte [kg/m³ bei 195°C Schäumtemp.] | Druckfestigkeit nach DIN 53 421 [N/mm²] |
|---|---|---|---|
| [Gew.-Teile dosiert pro 10 Gew.-Teile Polymer] | enthalten im Granulat [Gew.-%] | | |
| Methylethylketon | | | |
| 1,5 | 9,2 | 47 | 0,59 |
| 1,4 | 8,0 | 57 | 0,78 |
| 1,3 | 7,4 | 62 | 0,92 |

| Aceton | | | |
|---|---|---|---|
| 1,2 | 6,7 | 71 | - |

### Beispiel 5

Man verfuhr wie in Beispiel 1, dosierte aber zusätzlich 0,2 Gew.-Teile Azodicarbonamid pro 10 Gew.-Teile Polymer zu. Der Treibmittelgehalt im Granulat betrug 10,2 Gew.-%. Bei einer Schäumtemperatur von 190°C entstand ein Schaumstoff der Rohdichte 35 kg/m³ mit Zelldurchmessern von 0,2 bis 0,4 mm.

## Patentansprüche

1. Verfahren zur Herstellung von expandierbarem Granulat auf der Basis von Polyarylethersulfonen, enthaltend 5 bis 20 Gew.-%, bezogen auf das Gesamtgewicht des Granulats, Methylethylketon oder Aceton als Treibmittel, dadurch gekennzeichnet, daß das Treibmittel und die Polymeren in einem Extruder bei einer Gehäusetemperatur von mindestens 50°C und maximal 170°C gemischt und anschließend direkt in ein Medium mit einer Temperatur von weniger als 40°C extrudiert werden.

2. Verfahren zur Herstellung von Schaumstoffen aus einem nach Anspruch 1 hergestellten, expandierbaren Granulat auf der Basis von Polyarylethersulfonen, dadurch gekennzeichnet, daß man
a) das Granulat bei einer Temperatur von 120 bis 250°C und einem Druck von 5 bis 30 bar zu einer Platte mit einer Dicke von 1 bis 20 mm verpreßt und anschließend
b₁) durch Druckerniedrigung aufschäumt
oder
b₂) nach dem Abkühlen unter Druck die so erhaltene Platte durch erneutes Erhitzen auf Temperaturen von 150 bis 250°C aufschäumt
und gegebenenfalls
c) den so erhaltenen Schaumstoff einer thermischen Behandlung zur weitgehenden Entfernung des noch vorhandenen Treibmittels unterwirft.

## Claims

1. A process for the preparation of expandable granules based on a polyaryl ether sulfone, containing from 5 to 20% by weight, based on the total weight of the granules, of methyl ethyl ketone or acetone as blowing agent, wherein the blowing agent and the polymers are mixed in an extruder at a barrel temperature of at least 50°C and at most 170°C and subsequently extruded directly into a medium at below 40°C.

2. A process for the production of a foam from expandable granules based on a polyaryl ether sulfone which are prepared as claimed in claim 1, wherein
a) the granules are press molded at from 120 to 250°C and at a pressure of from 5 to 30 bar to form a sheet having a thickness of from 1 to 20 mm, and the sheet is subsequently
b₁) foamed by reducing the pressure
or
b₂) after cooling under pressure, foamed by reheating to from 150 to 250°C,
and, if desired,
c) the foam obtained in this way is subjected to thermal treatment in order to substantially remove the blowing agent still present.

## Revendications

1. Procédé de préparation de granulats expansibles à base de polyaryléthersulfones, contenant 5 à 20 % en poids, rapportés au poids total de granulat, de méthyléthylcétone ou acétone comme gonflant, caractérisé par le fait que le gonflant et le polymère sont mélangés dans une extrudeuse à une température de corps d'au moins 50°C et d'au plus 170°C et sont ensuite extrudés directement dans un milieu d'une température de moins de 40°C.

2. Procédé de préparation de matières alvéolaires à partir d'un granulat expansible à base de polyaryléthersulfone préparé selon la revendication 1, caractérisé par le fait que
a) on transforme à la presse le granulat en une plaque d'une épaisseur de 1 à 20 mm, à une température de 120 à 250°C et avec une pression de 5 à 30 bar, et ensuite
b1) on expanse par abaissement de pression ou
b2) après refroidissement sous pression, on expanse la plaque ainsi obtenue par nouvel échauffement à des températures de 150 à 250°C et éventuellement
c) on soumet la matière alvéolaire ainsi obtenue à un traitement thermique pour éliminer largement le gonflant encore présent.
